# EUROPÄISCHE PATENTSCHRIFT

(11) **EP 0 730 838 B1**
(45) Veröffentlichungstag und Bekanntmachung des Hinweises auf die Patenterteilung: **10.06.1998**
(21) Anmeldenummer: 96103684.5
(22) Anmeldetag: 08.03.1996
(51) Int. Cl.: A47J 36/38, A47J 37/12

(54) **Fritiergerät**
Fryer
Friteuse

(30) Priorität: 09.03.1995 CZ 60695
(43) Veröffentlichungstag der Anmeldung: 11.09.1996
(73) Patentinhaber: ISOLIT - BRAVO spol.s r.o., 561 64 Jablonné nad Orlici (CZ)
(72) Erfinder: Kvido, Stepánek, Ing., 561 51 Letohrad (CZ)
(74) Vertreter: Finck, Dieter, Dr.Ing.

(56) Entgegenhaltungen:
- EP-A- 0 095 797
- WO-A-94/23626
- DE-A- 4 106 348
- DE-U- 8 502 304
- FR-A- 1 565 684
- GB-A- 2 266 654

## Beschreibung

Die Erfindung betrifft eine Friteuse mit einem beheizbaren Behälter, mit einem den Behälter druckdicht verschließenden lösbaren Deckel, mit einem seitlich außen am Behälter lösbar angeordneten, mit Wasser füllbaren Gefäß, mit einer Verbindung zwischen Behälter und Gefäß und mit einem an diese Verbindung anschließbaren Schlauch oder Rohr, der bzw. das sich in das Gefäß erstreckt.

Bei einer solchen aus dem DE-U-85 02 304 bekannten Friteuse besteht die Verbindung zwischen Behälter und Gefäß aus einem Rohrkrümmer, der in den Wandteil des Deckels eingesetzt ist, der sich in der Richtung der Behälterseitenwand erstreckt. In das Ende des Krümmers greift abdichtend das eine Ende einer Rohrschlange ein, die sich durch das gesamte, mit Wasser gefüllte Gefäß erstreckt und mit ihrem unteren Ende in einem Kondensatsammelbehälter mündet, der unterhalb des Gefäßes angeordnet ist.

Die bekannte Friteuse erfordert einen zusätzlichen Kondensatbehälter und ermöglicht keine Filtrierung der aus der Friteuse abgeführten Dämpfe. Die Verbindung zwischen Behälter und Kondensatsammelbehälter ist durchgehend ausgebildet.

Die FR-A-1 565 684 zeigt eine Friteuse mit einem Behälter, auf dem fest verschließbar ein Deckel sitzt, in den zentral abgedichtet und von einer Wärmeisolierung umschlossen ein Schlauch mündet, der am anderen Ende durch den Deckel eines gesonderten mit Wasser gefüllten Behälters geführt ist und unter dem Wasserspiegel mündet.

Diese bekannte Anordnung ist baulich nicht kompakt. Durch die große Länge des Schlauchs kondensieren die Dämpfe großenteils bereits im Schlauch selbst, so daß es zu einem Rücklauf in die Friteuse oder zu einer Verstopfung des Schlauchs kommen kann.

Es ist ferner bekannt, im Deckel einer Friteuse eine Auslaßöffnung vorzusehen, in die ein Filter eingesetzt ist. Solche Filter setzen sich jedoch sehr schnell zu und müssen häufig ausgetauscht werden. Außerdem sind sie nicht geruchsdicht.

Die der Erfindung zugrundeliegende Aufgabe besteht nun darin, die Friteuse der eingangs genannten Art in kompakter Bauweise für ein Kondensieren und im wesentlichen verstopfungsfreies Filtrieren auszugestalten.

Diese Aufgabe wird ausgehend von der Friteuse der eingangs genannten Art dadurch gelöst, daß die Verbindung zwischen Behälter und Gefäß eine deckelseitig innen vorgesehene Ausnehmung aufweist, die mit einem im Deckel ausgebildeten Kanal in Verbindung steht, der im Umfangsrand des Deckels mündet, wo der Schlauch bzw. das Rohr anschließbar ist, und daß der Schlauch bzw. das Rohr an seinem freien Ende einen Filter trägt, der sich im unteren Teil des mit Wasser gefüllten Gefäßes befindet.

Wenn in dem Behälter aufgrund der Beheizung Speisen im flüssigen Fett oder Öl gegart werden, steigen die Dämpfe und Geruchsstoffe nach oben und gelangen über die Ausnehmung und den Kanal in den Schlauch oder das Rohr und werden in dem Filter am Ende des Schlauchs oder Rohrs eingefangen. Da sich der Filter in einer in dem Gefäß eingegossenen Flüssigkeit befindet, in der Regel Wasser mit einem Detergens, kondensieren durch den Filter hindurchgegangene Dampf- oder Geruchsstoffteilchen und bleiben in der Flüssigkeit, wobei, falls sie in Form von Blasen durch die Flüssigkeit aufsteigen, sich ein Langzeitkontakt mit großer Oberfläche ergibt, der für ein sicheres Kondensieren sorgt. Dadurch können im wesentlichen keine Dampf- und Geruchsstoffteilchen aus der Flüssigkeit, d.h. dem Wasser in dem Gefäß, entweichen, wobei der Zusatz des Detergens noch fettlösend wirkt. Die Friteuse kann deshalb zum Garen von Speisen verwendet werden, ohne daß der Raum, in dem sie sich befindet, besonders belüftet werden müßte.

Vorteilhafterweise ist im oberen Teil des Gefäßes eine Entlüftungsöffnung vorgesehen. Die obere Abdeckung des Gefäßes fluchtet zweckmäßigerweise mit der Deckeloberseite.

Anhand einer Zeichnung, die eine erfindungsgemäß ausgestaltete Friteuse im Querschnitt zeigt, wird die Erfindung näher erläutert.

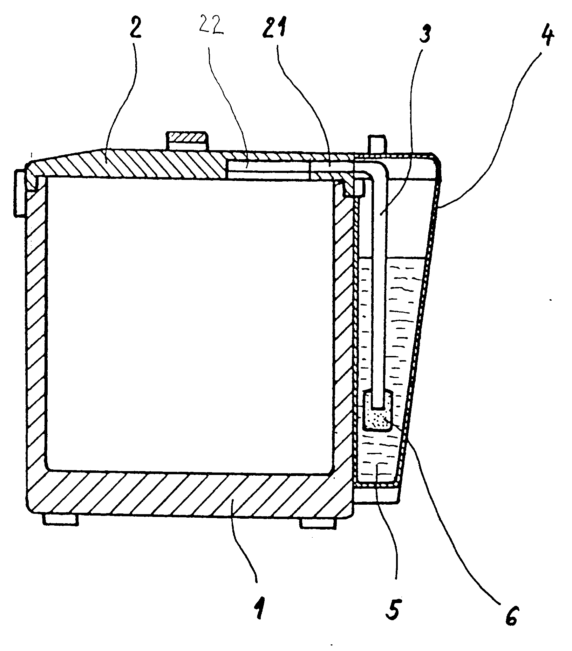

Die in der Zeichnung gezeigte Friteuse besteht aus einem Behälter 1, der direkt oder indirekt beheizbar ist, und aus einem Deckel 2, der zumindest geruchsdicht, häufig aber auch druckdicht auf dem Behälter in bekannter Weise, beispielsweise durch einen Bajonettverschluß, aufgebracht werden kann. Der Deckel 2 hat auf seiner Innenseite eine Ausnehmung 22, die in einen im Inneren des Deckels befindlichen Kanal 21 übergeht, der seinerseits im Umfangsrand des Deckels mündet.

An dem Behälter 1 ist seitlich ein Gefäß 4 angeordnet, dessen eine Wand an der Außenwand des Behälters anliegt und dessen Oberseite mit der Ebene der Deckeloberseite fluchtet. Das Gefäß 4 ist auf der Seite der Mündung des Kanals 21 angeordnet. Die Mündung des Kanals 21 ist mit einem Schlauch oder Rohr 3 verbunden, der bzw. das sich ins Innere des Gefäßes erstreckt und um dessen anderes Ende herum ein Filter 6 aus einem geeigneten Filtermaterial angeordnet ist. Der Filter 6 befindet sich im unteren Teil des Gefäßes 4. Das Gefäß 4 ist bis zu einer vorgegebenen Höhe mit Wasser gefüllt, dem ein fettlösendes Mittel zugesetzt sein kann.

Wenn die Friteuse in Betrieb ist, steigen von der Oberfläche des flüssigen Fetts oder Öls (nicht gezeigt) im Behälter 1 Dampftröpfchen, Dampfteilchen und Geruchsstoffteilchen nach oben und gelangen über die Ausnehmung 22 und den Kanal 21 durch das Rohr 3 in den Filter 6, wo sie teilweise absorbiert werden. Aus dem Filter austretende Dampf- und Geruchsstoffteilchen gelangen in das Wasser in dem Gefäß 4 aufgrund des Auftriebs nach oben. Auf dem Weg zur Oberfläche des Wassers kondensieren sie und werden im Wasser gelöst oder ab- bzw. adsorbiert.

Wenn das Gefäß 4 eine Entlüftungsöffnung hat, treten aus dieser, wenn die Friteuse beheizt wird und im Behälter 1 Speisen gegart werden, keine Dämpfe oder Gerüche aus.

## Patentansprüche

1. Friteuse
- mit einem beheizbaren Behälter (1),
- mit einem den Behälter (1) druckdicht verschließenden lösbaren Deckel (2),
- mit einem seitlich außen am Behälter (1) lösbar angeordneten, mit Wasser füllbaren Gefäß (4),
- mit einer Verbindung zwischen Behälter (1) und Gefäß (4) und
- mit einem an diese Verbindung anschließbaren Schlauch oder Rohr (3), der bzw. das sich in das Gefäß (4) erstreckt,
dadurch gekennzeichnet,
- daß die Verbindung zwischen Behälter (1) und Gefäß (4) eine deckelseitig innen vorgesehene Ausnehmung (22) aufweist, die mit einem im Deckel (2) ausgebildeten Kanal (21) in Verbindung steht, der im Umfangsrand des Deckels (2) mündet, wo der Schlauch bzw. das Rohr (3) anschließbar ist, und
- daß der Schlauch bzw. das Rohr (3) an seinem freien Ende einen Filter (6) trägt, der sich im unteren Teil des mit Wasser gefüllten Gefäßes (4) befindet.

2. Friteuse nach Anspruch 1, gekennzeichnet durch eine Entlüftungsöffnung im deckelseitigen Bereich des Gefäßes (4).

## Claims

1. Fryer
- with a container (1) which can be heated,
- with a removable lid (2) closing the container (1) in a pressure-tight manner,
- with a receptacle (4) which can be filled with water, arranged removably on the side of the container (1) externally,
- with a connection between the container (1) and the receptacle (4), and
- with a tube or pipe (3) connectible to this connection and extending into the receptacle (4),
characterized in that
- the connection between the container (1) and the receptacle (4) comprises a recess (22) provided inside the lid, communicating with a duct (21) formed in the lid (2) and opening in the peripheral edge of the lid (2) where the tube or pipe (3) can be connected, and
- the tube or pipe (3) carries at its free end a filter (6) which is disposed in the lower portion of the water-filled receptacle (4).

2. Fryer according to Claim 1, characterized by a vent in the region of the receptacle (4) beside the lid.

## Revendications

1. Friteuse dotée
- d'un récipient pouvant être chauffé (1)
- d'un couvercle (2) démontable fermant le récipient (1) de façon hermétique, - d'un réservoir (4) disposé de façon détachable latéralement à l'extérieur du récipient (1) et pouvant être rempli d'eau,
- d'une pièce de jonction entre le récipient (1) et le réservoir (4) et
- d'un tuyau ou d'un tube (3) pouvant être raccordé à cette pièce de jonction et pénétrant dans le réservoir (4),
caractérisée en ce que
- la pièce de jonction entre le récipient (1) et le réservoir (4) présente un évidement (22) intérieur côté couvercle étant relié à un canal (21) conçu dans le couvercle (2) qui débouche dans le périmètre du couvercle (2) où il est possible de raccorder le tuyau ou le tube (3), et en ce que
- le tuyau ou le tube (3) comporte, à son extrémité libre, un filtre (6) situé dans la partie inférieure du réservoir (4) rempli d'eau.

2. Friteuse selon la revendication 1, caractérisée par un orifice d'échappement dans la partie côté couvercle du réservoir (4).
